# EUROPÄISCHE PATENTANMELDUNG

(11) **EP 2 166 309 A2**
(43) Veröffentlichungstag der Anmeldung: **24.03.2010**
(21) Anmeldenummer: 09162851.1
(22) Anmeldetag: 16.06.2009
(51) Int. Cl.: G01C 21/34, G08G 1/0968, F01N 11/00

(54) **Fahrerinformationssystem und Verfahren hierfür**

(30) Priorität: 15.08.2008 DE 102008041293
(71) Anmelder: ROBERT BOSCH GMBH, 70442 Stuttgart (DE)
(72) Erfinder: Rychlak, Stefan, 31241, Ilsede (DE)

(57) **Zusammenfassung**

Die Erfindung betrifft ein Fahrerinformationssystem (1), wie insbesondere Navigationssystem, bei welchem Kartendaten zur Steuerung und/oder zur Routenberechnung und/oder zur Zielführung verwendet werden, wobei aufgrund von Kartendaten und/oder eingebbaren Daten insbesondere eines Fahrzeugs ein Emissionswert bestimmbar ist.

## Beschreibung

### Technisches Gebiet

Die Erfindung betrifft ein Fahrerinformationssystem, wie insbesondere ein Navigationssystem, bei welchem Kartendaten zur Steuerung und/oder zur Routenberechnung und/oder zur Zielführung herangezogen werden, insbesondere nach dem Oberbegriff von Anspruch 1, sowie ein Verfahren hierfür.

### Stand der Technik

Fahrerinformationssysteme oder Navigationssysteme sind im Stand der Technik bekannt. Sie dienen der Routenberechnung und/oder Zielführung beispielsweise eines Fahrzeugs anhand von vorhandenen nutzbaren Kartendaten und zuvor eingegebener Zieldaten durch optische und/oder akustische Anweisungen an den Fahrer, wobei darüber hinaus auch weitere Informationen beispielsweise auf einem Bildschirm dargestellt werden können. So können Punkte des Interesses (POI), wie beispielsweise Hotels, Restaurants etc. auf einer Karte auf dem Bildschirm angezeigt werden. Auch können Verkehrsschilder und Geschwindigkeitsbegrenzungen auf der vorliegend befahrenen Straße oder auf angezeigten Straßen angegeben werden.

Weiterhin ist es ein allgemeines Bestreben insbesondere auch im individuellen Personenverkehr bzw. individuellen Automobilverkehr aber auch im gewerblichen Automobilverkehr die Emissionen zu reduzieren und die diesbezüglichen Fahrzeuge derart zu betreiben, dass eine reduzieren der Emissionen erreicht wird.

Die DE 196 05 458 C1 offenbart ein Fahrzeugnavigationssystem, bei welchem die Auswahl der Fahrtroute des Fahrzeuges zu einem Zielpunkt entsprechend dem Kraftstoffverbrauch durchgeführt wird. So wird bei einer Mehrzahl von vorliegenden möglichen auswählbaren Fahrtrouten unterschieden, welche Höhenprofile zu durchfahren wären und was dies für eine Rückwirkung auf den Kraftstoffverbrauch hat, so dass anhand eine Abschätzung des Kraftstoffverbrauchs auf den auswählbaren Fahrtrouten dann die im Hinblick auf den Kraftstoffverbrauch günstigste Fahrtroute ausgewählt wird.

Dies hat den entscheidenden Nachteil, dass neben dem oben geschilderten Höhenprofil der Route nach wie vor das Fahrerverhalten den entscheidendsten Einfluss auf Kraftstoffverbrauch und auf Emissionen hat.

So kann in Abhängigkeit einer entsprechend eher weniger schonenden Fahrweise selbst bei der im Hinblick auf den Kraftstoffverbrauch am günstigsten Route ein Kraftstoffverbrauch erzielt werden, der deutlich über dem Kraftstoffverbrauch liegt, der bei einer weniger optimalen Route aber bei schonender Fahrweise erzielt wird.

Somit ist die Auswahl der Fahrtroute zwar ein Baustein in der Erzielung geringen Verbrauchs oder geringer Emissionen, dies genügt alleine jedoch nicht, um tatsächlich eine geringe Emission zu erreichen.

### Darstellung der Erfindung: Aufgabe, Lösung, Vorteile

Es ist die Aufgabe der Erfindung, ein Fahrerinformationssystem, wie insbesondere ein Navigationssystem, und ein Verfahren hierfür zu schaffen, mittels welchem eine verringerte Emission beim Betrieb des Fahrzeugs erreichbar ist.

Dies wird erreicht für das Fahrerinformationssystem mit den Merkmalen von Anspruch 1, wonach bei einem Fahrerinformationssystem, wie insbesondere Navigationssystem, bei welchem Kartendaten zur Steuerung und/oder zur Routenberechnung und/oder zur Zielführung verwendet werden, wobei aufgrund von Kartendaten und/oder eingebbaren Daten insbesondere eines Fahrzeugs ein Emissionswert bestimmbar ist.

Dabei ist es besonders zweckmäßig, die eingebbaren Daten zumindest Daten zum Antriebsmotor, Gewicht des Fahrzeugs, Kraftstoffart und/oder Kraftstoffverbrauch etc. umfassen.

Auch ist es zweckmäßig, wenn der berechnete Emissionswert auf dem Bildschirm darstellbar ist. Dies kann insbesondere dazu führen, dass ein Lernprozess bei dem Fahrer ausgelöst wird, um beispielsweise eine emissionsarme Fahrweise einzuleiten.

Auch ist es zweckmäßig, wenn der berechnete Emissionswert ein momentaner Emissionswert oder ein über eine vorgebbare Fahrtstrecke kumulierter Emissionswert ist. Dabei kann der kumulierte Wert ein über eine vorgebbare Fahrtstrecke kumulierter Wert ist, wobei die Fahrtstrecke vorzugsweise eine zu einem vorgebbaren Ziel bestimmte Route ist.

Auch ist es zweckmäßig, wenn das Fahrerinformationssystem mit einer Motorsteuerung verbindbar ist und der Motorsteuerung ein eine Emission repräsentierendes Signal zur Verfügung stellt, woraufhin eine reduzierte Emission ansteuerbar ist.

Die Aufgabe der Erfindung zu dem Verfahren wird weiterhin erreicht mit den Merkmalen von Anspruch 7, wonach ein Verfahren zum Betreiben eines Fahrerinformationssystems geschaffen wird, wie insbesondere eines Navigationssystem, bei welchem Kartendaten zur Steuerung und/oder zur Routenberechnung und/oder zur Zielführung verwendet werden, wobei aufgrund von Kartendaten und/oder eingebbaren Daten insbesondere eines Fahrzeugs ein Emissionswert bestimmt wird.

Dabei ist es vorteilhaft, wenn der berechnete Emissionswert auf dem Bildschirm dargestellt wird.

Neben dem Aspekt der direkten Fahrerbeeinflussung durch die obige Anzeige des Emissionswertes kann weiterhin eine Änderung einer Einstellung von einer Motorsteuerung durchgeführt werden, so dass eine solche Ansteuerung zu einer reduzierten Motorleistung des Fahrzeugantriebsmotors führt.

Dabei ist es vorzugsweise zweckmäßig, wenn der berechnete Emissionswert ein momentaner Emissionswert oder ein über eine vorgebbare Fahrtstrecke kumulierter Emissionswert ist.

Auch ist es zweckmäßig, wenn der berechnete Emissionswert von einem geführten Guthabenkonto für Emissionswerte abgezogen wird, auf welchem Emissionswerte als Guthaben geführt und angezeigt werden.

Weiterhin ist es nach einem weiterer vorteilhaften Weiterbildung zweckmäßig, wenn für emissionsfreie Fahrzeuge ein fiktiver berechneter Emissionswert von einem geführten Guthabenkonto für Emissionswerte als Guthaben gut geschrieben wird.

Weiterhin ist es vorteilhaft, wenn abgefragt wird, ob der Bediener/Fahrer des Fahrerinformationssystems den Abzug oder der Gutschrift der Emissionswerte zustimmt, wobei bei Vorliegen der Zustimmung der Abzugsprozess der voraussichtlichen Emissionswerte oder der tatsächlich verursachten Emissionswerte von dem Guthaben oder die Gutschrift auf das Guthabenkonto durchgeführt wird, wobei anderenfalls bei Nichtvorliegen der Zustimmung insbesondere für den Abzug eine Routenführung zu einem zuvor eingegebenen Ziel nicht durchgeführt wird.

Weitere erfindungsgemäße Vorteile werden durch die Unteransprüche beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung einer erfindungsgemäßen Fahrerinformationssystems,
- Fig.2: einen schematischen Ablauf eines erfindungsgemäßen Verfahrens.

### Bevorzugte Ausführung der Erfindung

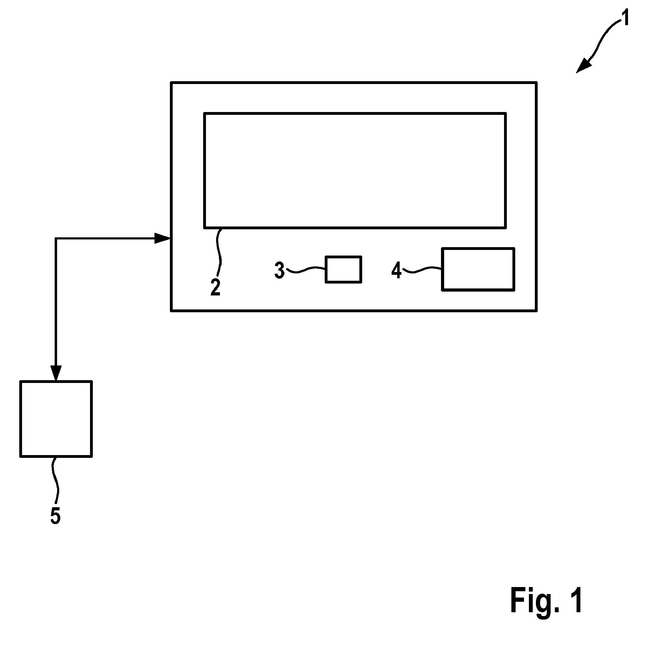

Die Figur 1 zeigt schematisch ein Fahrerinformationssystem 1, welches vorzugsweise einen Bildschirm bzw. eine Anzeige 2 zur optischen Anzeige von Daten und/oder Informationen aufweist. Ein solches Fahrerinformationssystem 1 kann vorzugsweise in einem Fahrzeug vorgesehen und installiert sein oder es kann als mobiles Gerät in einem Fahrzeug demontierbar und auch in wechselnden Fahrzeugen betrieben werden. Der Bildschirm 2 dient vorzugsweise zur Darstellung von Kartendaten zur Routenanzeige und/oder zur Routenzielführung, sowie zur Darstellung von Anweisungen zur Routenzielführung und zur Anzeige von sonstigen Daten oder Informationen, wie beispielsweise Punkte des Interesses (POI), Verkehrsregelungen etc. Als Bildschirm 2 wird eine Anzeige im weitesten Sinne verstanden zur Anzeige von Informationen.

Vorteilhaft könnte auch ein Bildschirm 2 eines anderen Geräts beispielsweise in einem Fahrzeug verwendet werden, wenn kein eigener Bildschirm des Fahrerinformationssystems vorgesehen ist. Auch kann eine akustische Signalisierung zusätzlich oder als Ersatz zu der optischen Signalisierung erfolgen.

Weiterhin sind Eingabemittel 3 vorgesehen, mittels welchen unter vorteilhafter Zuhilfenahme eines Bedienungsmenüs das Fahrerinformationssystem 1 bedient werden kann. Damit kann also ein auch ein Ziel oder es können sonstige Daten, wie auch Fahrzeugdaten, eingegeben werden oder eine Aktion, wie beispielsweise eine Zielführung gestartet werden.

Darüber hinaus verfügt das Fahrerinformationssystem 1 über einen Speicher 4, in welchem vorzugsweise Kartendaten gespeichert sind. Diese Kartendaten können auf einer CD-Rom, einer DVD oder einem anderen optischen Speichermedium gespeichert sein. Der Speicher 4 kann aber auch eine Festplatte, ein Festspeichermedium oder eine Chipkarte sein. Darüber hinaus kann als Speichermedium 4 eine drahtlose Kommunikationsverbindung, wie WLAN-Verbindung, P2P-Verbindung insbesondere zwischen Fahrzeugen oder eine andere Verbindung vom Typ Galileo, GPS, BT o.ä. angesehen werden. Über den Speicher 4 werden Kartendaten an den Prozessor des Fahrerinformationssystems weitergeleitet und verarbeitet.

Das erfindungsgemäße Fahrerinformationssystem 1 wird vorzugsweise für Fahrzeuge verwendet, wobei es beispielsweise fest in ein Fahrzeug beispielsweise im Bereich des Armaturenbretts oder der Mittelkonsole eingebaut werden kann. Dabei werden Kartendaten einer Karte 10 zur Steuerung und/oder zur Routenberechnung und/oder zur Zielführung verwendet, die beispielsweise in einem Kartendatenspeicher 4 vorliegen.

Auf dem Bildschirm 2 sind erfindungsgemäß weiterhin Daten anzeigbar, die eine Emission des Fahrzeugs betreffen. So kann aufgrund eingegebener und verarbeiteter Daten zum Fahrzeug ggf. auch unter Zuhilfenahme von Kartendaten eine Emission des Fahrzeugs, wie beispielsweise der CO2-Ausstoß, ermittelt werden und auf dem Bildschirm und/oder akustisch angezeigt bzw. mitgeteilt werden.

Die Berechnung der Emissionswerte erfolgt vorteilhaft auf der Grundlage der Daten von Fahrzeuggeschwindigkeit, Beschleunigung des Fahrzeugs, Länge der Wegstrecke und/oder Daten zum grundsätzlichen Ausstoß des Fahrzeuges, die zuvor eingebbar sind. Die Eingabe der Daten zum grundsätzlichen Ausstoß des Fahrzeuges können vorzugsweise über eine Menüstruktur des Systems 1 eingegeben werden, wobei diese Daten in dem Speicher 4 des Systems speicherbar sind und später wieder auslesbar und verwendbar sind.

Dabei ist es vorteilhaft, wenn sowohl die momentanen Emissionswerte als auch kumulierte Emissionsdaten und wegstreckenspezifische bzw. fahrtroutenspezifische Emissionsdaten anzeigbar sind. Die Anzeige der Emissionswerte kann vorteilhaft in Form einer Anzeige von Zahlenwerten oder als grafische Darstellung erfolgen. Dabei ist es besonders vorteilhaft, wenn der Bediener des Systems 1 zwischen den verschiedenen Anzeigemodi umschalten kann, so dass er je nach Auswahl entweder die momentanen Emissionswerte, kumulierte Emissionsdaten oder wegstreckenspezifische bzw. fahrtroutenspezifische Emissionsdaten angezeigt bekommt. Auch ist es zweckmäßig, wenn in einem Anzeigemodus sowohl momentane Emissionswerte, kumulierte Emissionsdaten und/oder wegstreckenspezifische bzw. fahrtroutenspezifische Emissionsdaten gleichzeitig angezeigt werden, um einen besseren Überblick über die aktuelle Fahrsituation zu erhalten.

Die Anzeige der Emissionswerte hat auch den vorteilhaften Zweck, den Fahrer zu einer umweltfreundlicheren Fahrweise zu animieren und ggf. sich über die beabsichtigte Verwendung des Fahrzeuges bewusst zu machen und evtl. eine alternative emissionsärmere Art der Fortbewegung zu wählen, um den Ausstoß von CO2 oder anderer Emissionen zu reduzieren.

Besonders vorteilhaft ist es somit, wenn in der Anzeige des Systems 1 die Emissionen bzw. der CO2-Ausstoß anzeigbar ist, um zu einer emissionsärmeren Fahrweise bzw. zu einem emissionsärmeren Umgang mit dem Fahrzeug zu führen.

Beispielsweise kann nach einer Routenberechnung zu einem Zielpunkt den für die berechnete Route voraussichtlich verursachten Emissionswert angezeigt werden und verlangt werden, durch Menüanzeige, dass der Bediener oder Fahrer diesen Wert freigibt, so dass erst danach die Zielführung durch das Fahrerinformationssystem durchgeführt wird. Dies führt zu einer positiven Wahrnehmung der Emissionsproblematik und führt zu einem Lernverhalten des Fahrers, beispielsweise emissionsärmer zu fahren oder gar gewisse Strecken nicht mit dem Fahrzeug zurückzulegen.

Beispielsweise kann auch eine kumulierte Emission als Währung/Tauschware angesehen werden, die von einem vorgebbaren Kontoguthaben abgezogen wird, damit der Fahrer verstärkt wahrnimmt, dass er durch eine besonders aufmerksame und emissionsarme Fahrweise eine höhere Reichweite erzielt und auch geringere Kosten verursacht. So kann beispielsweise ein Guthaben von 3000 g vorgesehen sein, das durch die entsprechend zurückgelegte Strecke und die entsprechende Fahrweise abgebaut wird.

Bei emissionsfreien Fahrzeugen kann eine fiktive Emission für eine zurückgelegte Wegstrecke, die entsprechend gerade nicht verursacht wurde, auch einem Guthabenkonto gut geschrieben werden, so dass gegebenenfalls ein anderes Fahrzeug mit Emission dieses Guthaben aufbrauchen kann.

Die Eintragung einer Gutschrift oder einer Abbuchung kann vorteilhaft drahtlos, wie beispielsweise mittels WLAN-Verbindung etc. übertragen werden bzw. erfolgen.

Auch kann vor Fahrtantritt geprüft werden, ob das für die beabsichtigte Fahrtstrecke benötigte Guthaben vorhanden ist. Danach kann eine Bestätigung des Fahrers des Fahrzeugs verlangt werden, so dass dann die Fahrt beispielsweise freigegeben wird und die berechnete Menge an Emissionen vom guthaben abgezogen werden. Auch kann der Abzug vom Guthaben anhand der tatsächlich verursachten Emissionen nach dem Ende der Fahrt oder schrittweise während der Fahrt erfolgen.

Gemäß eines weiteren erfindungsgemäßen Gedankens, kann es vorteilhaft sein, wenn bei einem zulässigen Überschreiten von Emissionsvorgaben oder Grenzwerten eine Reduktion der Motorleistung angesteuert wird, so dass das Emissionsverhalten des Fahrzeugs verbessert wird. Dazu kann das Fahrerinformationssystem 1 mit der Motorsteuerung 5 eines Antriebsmotors in Signalverbindung stehen.

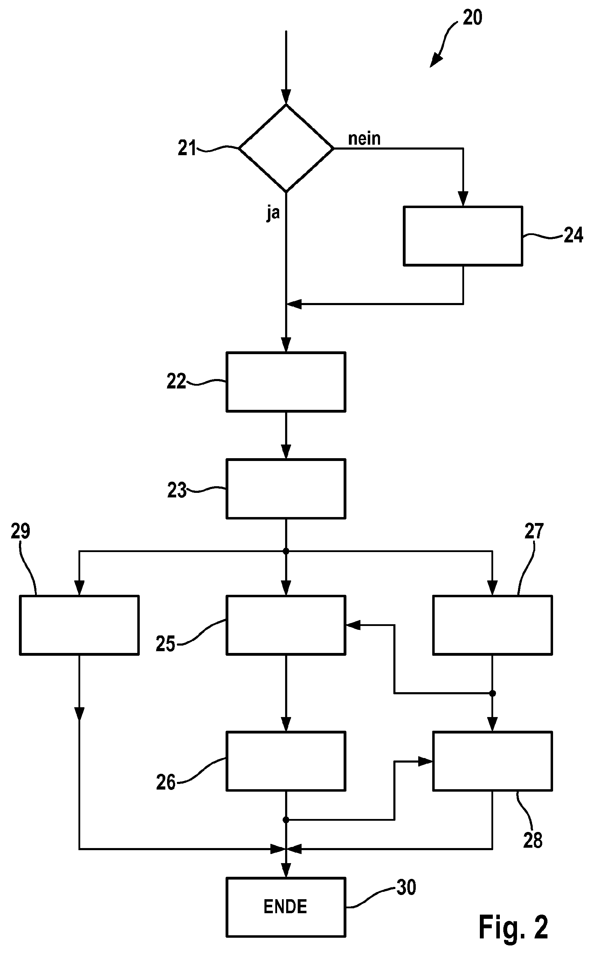

Gemäß Figur 2 kann das erfindungsgemäße Verfahren 20 vorteilhaft derart durchgeführt werden, dass in Block 21 abgefragt wird, ob Daten zur Emissionsbestimmung bereits vorliegen oder nicht. Wenn ja, werden diese Daten bei einer Routenauswahl und/oder Zielführung 22 verwendet, so dass die Emissionswerte zu einer bestimmten Fahrtroute angezeigt werden 23. Wenn die Abfrage 21 verneint wird, so wird in Block 24 eine Eingabe von Daten zur Emissionsbestimmung angefragt.

In Block 25 erfolgt optional eine Anfrage zur Freigabe der bestimmten Fahrtroute aufgrund der angezeigten Emissionswerte. Diese Freigabe wird in Block 26 gegeben, anderenfalls würde zu Block 30 gesprungen und das Verfahren beendet.

Auch kann alternativ in Block 27 ein Guthabenkonto geführt werden, auf welchem Emissionswerte als Guthaben geführt und angezeigt werden, von welchen die erzeugten Emissionswerte abgezogen werden. Entsprechend wird anschließend bei Block 25 abgefragt, ob der Bediener/Fahrer den Abzug der entsprechend bestimmten voraussichtlichen Emissionswerte zustimmt. Die Zustimmung wird wieder in Block 26 abgefragt, woraufhin in Block 28 der Abzugsprozess der voraussichtlichen Emissionswerte oder der tatsächlich verursachten Emissionswerte durchgeführt wird.

Weiterhin ist es vorteilhaft, wenn bei einem weiteren Ausführungsbeispiel der Erfindung in Block 29 eine Ansteuerung des Antriebsmotors derart erfolgt, dass die Motorsteuerung eine reduzierte Emission ansteuert, wie beispielsweise durch eine reduzierte Leistung des Antriebsmotors. Dies kann beispielsweise durch eine Reduzierung der Einspritzmenge des Kraftstoffs erfolgen. Dazu kann das Fahrerinformationssystem direkt an eine Motorsteuerung ein Signal abgeben, dass eine entsprechende Reduzierung der Emission angesteuert wird, oder es kann lediglich ein Emissionswert vorgegeben werden, woraufhin die Motorsteuerung eine entsprechende Ansteuerung wählt, um den Emissionswert zu unterschreiten.

## Patentansprüche

1. Fahrerinformationssystem (1), wie insbesondere Navigationssystem, bei welchem Kartendaten zur Steuerung und/oder zur Routenberechnung und/oder zur Zielführung verwendet werden, **dadurch gekennzeichnet, dass** aufgrund von Kartendaten und/oder eingebbaren Daten insbesondere eines Fahrzeugs ein Emissionswert bestimmbar ist.

2. Fahrerinformationssystem (1) nach Anspruch 1, **dadurch gekennzeichnet, dass** die eingebbaren Daten zumindest Daten zum Antriebsmotor, Gewicht des Fahrzeugs, Kraftstoffart und/oder Kraftstoffverbrauch etc. umfassen.

3. Fahrerinformationssystem (1) nach Anspruch 1 oder 2, **dadurch gekennzeichnet, dass** der berechnete Emissionswert auf einem Bildschirm (2) darstellbar ist.

4. Fahrerinformationssystem (1) nach Anspruch 1 oder 2, **dadurch gekennzeichnet, dass** der berechnete Emissionswert ein momentaner Emissionswert oder ein über eine vorgebbare Fahrtstrecke kumulierter Emissionswert ist.

5. Fahrerinformationssystem (1) nach Anspruch 4, **dadurch gekennzeichnet, dass** die vorgebbare Fahrtstrecke eine zu einem vorgebbaren Ziel bestimmte Route ist.

6. Fahrerinformationssystem (1) nach einem der vorhergehenden Ansprüche, **dadurch gekennzeichnet**, das Fahrerinformationssystem mit einer Motorsteuerung verbindbar ist und der Motorsteuerung ein eine Emission repräsentierendes Signal zur Verfügung stellt, woraufhin eine reduzierte Emission ansteuerbar ist.

7. Verfahren zum Betreiben eines Fahrerinformationssystems (1), wie insbesondere eines Navigationssystem, bei welchem Kartendaten zur Steuerung und/oder zur Routenberechnung und/oder zur Zielführung verwendet werden, **dadurch gekennzeichnet, dass** aufgrund von Kartendaten und/oder eingebbaren Daten insbesondere eines Fahrzeugs ein Emissionswert bestimmt wird.

8. Verfahren nach Anspruch 7, **dadurch gekennzeichnet, dass** der berechnete Emissionswert auf einem Bildschirm (2) dargestellt wird.

9. Verfahren nach Anspruch 14, **dadurch gekennzeichnet, dass** die Änderung der Einstellung zu einer Ansteuerung einer reduzierten Motorleistung des Fahrzeugantriebsmotors führt.

10. Verfahren nach Anspruch 7, 8 oder 9, **dadurch gekennzeichnet, dass** der berechnete Emissionswert ein momentaner Emissionswert oder ein über eine vorgebbare Fahrtstrecke kumulierter Emissionswert ist.

11. Verfahren nach einem der Ansprüche 7 bis 10, **dadurch gekennzeichnet, dass** der berechnete Emissionswert von einem geführten Guthabenkonto für Emissionswerte abgezogen wird, auf welchem Emissionswerte als Guthaben geführt und angezeigt werden.

12. Verfahren nach einem der Ansprüche 7 bis 10, **dadurch gekennzeichnet, dass** für emissionsfreie Fahrzeuge ein fiktiver berechneter Emissionswert von einem geführten Guthabenkonto für Emissionswerte als Guthaben gut geschrieben wird.

13. Verfahren nach Anspruch 11 oder 12, **dadurch gekennzeichnet, dass** abgefragt wird, ob der Bediener/Fahrer des Fahrerinformationssystems dem Abzug oder der Gutschrift der Emissionswerte zustimmt, wobei bei Vorliegen der Zustimmung der Abzugsprozess der voraussichtlichen Emissionswerte oder der tatsächlich verursachten Emissionswerte von dem Guthaben oder die Gutschrift durchgeführt wird.

14. Verfahren nach Anspruch 13, **dadurch gekennzeichnet, dass** anderenfalls bei Nichtvorliegen der Zustimmung insbesondere bei Abzug vom Guthabenkonto eine Routenführung zu einem zuvor eingegebenen Ziel nicht durchgeführt wird.
